# EUROPÄISCHE PATENTANMELDUNG

(11) **EP 4 400 717 A1**
(43) Veröffentlichungstag der Anmeldung: **17.07.2024**
(21) Anmeldenummer: 24020001.4
(22) Anmeldetag: 02.01.2024
(51) Int. Cl.: F04B 39/06, F04B 39/12, F04C 29/04, B60H 1/00

(54) **DRUCKLUFTERZEUGUNGSEINHEIT ZUM ERZEUGEN VON DRUCKLUFT FÜR EIN PNEUMATISCHES SYSTEM EINES FAHRZEUGS SOWIE BATTERIEELEKTRISCH BETRIEBENES FAHRZEUG MIT ZUMINDEST EINEM PNEUMATISCHEN SYSTEM MIT ZUMINDEST EINER SOLCHEN DRUCKLUFTERZEUGUNGSEINHEIT**

(30) Priorität: 13.01.2023 DE 102023000093
(71) Anmelder: Voss Automotive GmbH, 51688 Wipperfürth (DE)
(72) Erfinder: SCHWARZKOPF, Otfried, 51515 Kürten (DE)
(74) Vertreter: Rebbereh, Cornelia

(57) **Zusammenfassung**

Bei einer Drucklufterzeugungseinheit (1) zum Erzeugen von Druckluft für ein pneumatisches System (6) eines Fahrzeugs, insbesondere eines batterieelektrisch betriebenen Fahrzeugs (3), umfasst die Drucklufterzeugungseinheit (1) zumindest zwei Verdichterstufen (10, 12), wobei eine erste Drucklage (p₂) nach einer ersten Verdichterstufe (10) und eine zweite Drucklage (p₃) nach einer zweiten Verdichterstufe (12) erreichbar ist oder erreicht wird, und ist zumindest eine Kühleinrichtung (11, 13) zum Kühlen zumindest zwischen der ersten und der zweiten Drucklage (p₂, p₃) vorgesehen, wobei die zumindest eine Kühleinrichtung (11, 13) zum thermischen Koppeln mit einem Thermomanagementsystem (2) des Fahrzeugs (3) ausgebildet ist. Bei einem batterieelektrisch betriebenen Fahrzeug (3), insbesondere Landfahrzeug, umfassend zumindest ein pneumatisches System (6) und zumindest ein Thermomanagementsystem (2), wobei das zumindest eine Thermomanagementsystem (2) zumindest einen Kühlmittelkreislauf (29) mit zumindest einer Kühlmittelleitung (26, 27, 28, 52, 54, 56, 58) umfasst, und wobei das pneumatische System (6) zumindest eine solche Drucklufterzeugungseinheit (1), sind das Thermomanagementsystem (2) und das pneumatische System (6) thermisch koppelbar oder gekoppelt zur Wärmeabfuhr aus dem pneumatischen System (6) und zum Wärmeeintrag in das Thermomanagementsystem (2).

## Beschreibung

Die Erfindung betrifft eine Drucklufterzeugungseinheit zum Erzeugen von Druckluft für ein pneumatisches System eines Fahrzeug, insbesondere eines batterieelektrisch betriebenen Fahrzeugs, sowie ein batterieelektrisch betriebenes Fahrzeug, insbesondere Landfahrzeug, umfassend zumindest ein pneumatisches System und zumindest ein Thermomanagementsystem, wobei das zumindest eine Thermomanagementsystem zumindest einen Kühlmittelkreislauf mit zumindest einer Kühlmittelleitung umfasst, und wobei das pneumatische System zumindest eine solche Drucklufterzeugungseinheit umfasst.

Drucklufterzeugungseinheiten zum Erzeugen von Druckluft sind bei Fahrzeugen vorallem für pneumatische Systeme in Form von Luftfedersystemen bekannt. Solche Luftfedersysteme werden bei hochpreisigen Fahrzeugen bzw. Pkw eingebaut, um eine Niveauregulierung des Fahrwerks und Fahrkomfort zu ermöglichen. Solche Luftfedersysteme umfassen u.a. einen Hubkolbenverdichter bzw. Einzylinderverdichter mit Kurbelwelle bzw. Exzenterwelle, Pleuel sowie weitere Bauteile. Der Antrieb solcher Luftfedersysteme erfolgt über einen Elektromotor. Als weitere Komponenten umfasst ein solches Luftfedersystem Ventile, Leitungen und selbstverständlich die Luftfedern. In der Regel ist jedem Rad eines Fahrzeugs eine Luftfeder zugeordnet und im Bereich des Rades angeordnet. Ein solches Luftfedersystem ist üblicherweise in der Radmulde, im Kofferraum oder im Bereich nah an den Radkästen des Fahrzeugs angeordnet. Im Betrieb der Luftfedersysteme treten durch die Verwendung eines Einzylinderverdichters mit Exzenterwelle und Pleuel Ungleichförmigkeiten auf und es ist ein Massenausgleich zweiter Ordnung erforderlich, um die ansonsten starke Geräuschentwicklung und Beschädigungen zu vermeiden. Dies erweist sich als negativ beim Betrieb solcher Luftfedersysteme. Ferner ist es erforderlich, im Betrieb auftretende Feuchtigkeit zu entziehen, wofür Drucklufttrockner vorgesehen werden. Zudem wird bei der Verdichtung eine große Menge Wärme erzeugt, die eigentlich abgeführt werden sollte, um ein Überhitzen zu vermeiden.

Da die Luftfedern bzw. das Luftfedersystem üblicherweise in einer Radmulde eines Fahrzeugs angeordnet wird, zur Geräuschminderung üblicherweise aufgenommen in einer Kapselung, ist es aufgrund Luftstaus in der Kapselung kaum oder nicht möglich, den Hubkolben- bzw. Einzylinderverdichter des Luftfedersystems durch permanent neu zugeführte Luft, erzwungene Konvektion etc. effektiv zu kühlen. Das Vorsehen einer Kühlung durch Wasser wäre sehr aufwendig, da ein Verdichterzylinderkopf dann einen Wasseranschluss benötigen würde, bzw. wäre ein Kühlwasserkreislauf am Einbauort des Hubkolbenverdichters nicht verfügbar und müsste erst aufwendig dorthin verlegt werden. Bei den bekannten Luftfedersystemen treten somit sowohl akustische als auch thermische Probleme auf.

Aus der US 2015/0275882 A1 ist ein Federungssystem zur Verwendung in einem Fahrzeug bekannt, wobei das Federungssystem Druckluftfedern zum Einstellen der Fahrthöhe des Fahrzeugs umfasst. Die Druckluftfedern sind mit einem Verdichter gekoppelt zum Verdichten der Luft zum Betreiben der Druckluftfedern. Die Druckluftfedern sind an den Ausgang des Verdichters über eine Leitung angeschlossen, die die unter Druck stehende Luft überträgt. Die Leitung bildet einen unter Druck stehenden Fluidweg zwischen dem Verdichter und den Druckluftfedern. Das System umfasst ferner Schalldämpfer zum Reduzieren des akustischen Lärms, der von der Leitung abgegeben wird. Der Schalldämpfer ist in dem unter Druck stehenden Weg angeordnet. Allerdings ergibt sich die Problematik, dass das hier vorgesehene Gehäuse zwar für eine gute Schalldämpfung, zugleich jedoch für einen Wärmestau im Luftverdichter sorgt. Dies kann zu einer reduzierten Lebensdauer des Luftverdichters, zu erhöhten Schaltzyklen, dem Erfordernis einer zu großen Dimensionierung und dementsprechend zu erhöhten Kosten führen.

Der vorliegenden Erfindung liegt daher die Aufgabe zugrunde, eine Drucklufterzeugungseinheit zum Erzeugen von Druckluft für ein pneumatisches System eines Fahrzeugs, insbesondere eines batterieelektrisch betriebenen Fahrzeugs, ebenso wie ein entsprechendes batterieelektrisch betriebenes Fahrzeug, insbesondere Landfahrzeug, umfassend zumindest ein solches pneumatisches System und zumindest ein Thermomanagementsystem vorzusehen, bei der bzw. dem die Lebensdauer der Drucklufterzeugungseinheit gegenüber den bekannten Drucklufterzeugungseinheiten erhöht, die kostengünstiger konzipiert bzw. hergestellt werden kann und bei der eine geringe Geräuschentwicklung auftritt als bei den Drucklufterzeugungseinheiten des Standes der Technik.

Die Aufgabe wird für eine Drucklufterzeugungseinheit nach dem Oberbegriff des Anspruchs 1 dadurch gelöst, dass die Drucklufterzeugungseinheit zumindest zwei Verdichterstufen umfasst, wobei eine erste Drucklage nach einer ersten Verdichterstufe und eine zweite Drucklage nach einer zweiten Verdichterstufe erreichbar ist oder erreicht wird, und dass zumindest eine Kühleinrichtung zum Kühlen zumindest zwischen der ersten und der zweiten Drucklage vorgesehen ist, wobei die zumindest eine Kühleinrichtung zum thermischen Koppeln mit einem Thermomanagementsystem des Fahrzeugs ausgebildet ist. Für ein batterieelektrisch betriebenes Fahrzeug nach dem Oberbegriff des Anspruchs 8 wird die Aufgabe dadurch gelöst, dass das Thermomanagementsystem und das pneumatische System thermisch koppelbar oder gekoppelt sind zur Wärmeabfuhr aus dem pneumatischen System und zum Wärmeeintrag in das Thermomanagementsystem. Weiterbildungen der Erfindung sind in den abhängigen Ansprüchen definiert.

Dadurch wird eine Drucklufterzeugungseinheit zum Erzeugen von Druckluft für ein pneumatisches System eines Fahrzeugs, wie eines batterieelektrisch betriebenen Fahrzeugs, geschaffen, die zumindest zwei Verdichterstufen umfasst, wobei eine erste Drucklage nach einer bzw. der ersten Verdichterstufe und eine zweite Drucklage nach einer bzw. der zweiten Verdichterstufe erreicht werden kann bzw. erreicht wird. Ferner ist zumindest eine Kühleinrichtung zum Kühlen zumindest zwischen der ersten und der zweiten Drucklage vorgesehen, wobei die zumindest eine Kühleinrichtung mit einem Thermomanagementsystem des Fahrzeugs bzw. batterieelektrisch betriebenen Fahrzeugs thermisch gekoppelt wird. Hierdurch ist es möglich, über Flüssigkeitskühlung, nämlich den zumindest einen Kühlmittelkreislauf und/oder den zumindest einen Kältemittelkreislauf des Thermomanagementsystems des Fahrzeugs, die zumindest zwei Verdichterstufen der Drucklufterzeugungseinheit zu kühlen. Durch die Möglichkeit einer effizienten Wärmeabfuhr durch thermisches Koppeln der Drucklufterzeugungseinheit über die zumindest eine Kühleinrichtung mit dem Thermomanagementsystem des Fahrzeugs, insbesondere batterieelektrisch betriebenen Fahrzeugs, ist es möglich, die Lebensdauer der Drucklufterzeugungseinheit gegenüber den schlecht oder nicht gekühlten Drucklufterzeugungseinheiten des Standes der Technik zu erhöhen. Ferner ist die Geräuschentwicklung aufgrund des Vorsehens zumindest zweier Verdichterstufen geringer als bei den bekannten einstufigen Drucklufterzeugungseinheiten aufgrund der den beiden Verdichterstufen jeweils zu leistenden geringeren Druckdifferenz. Bei der zweistufigen Verdichtung sind zwei kleinere Druckstufen bzw. Druckdifferenzen im Vergleich zu einer großen Druckstufe bzw. Druckdifferenz bei einer einstufigen Verdichtung zu überwinden. Durch den Druckstoß beim Überverdichten tritt eine Geräuschentwicklung auf. Grundsätzlich können hierbei auch Beschädigungen auftreten, was durch Vorsehen der zumindest zwei Verdichterstufen ebenfalls vermieden werden kann. Zudem kann die Drucklufterzeugungseinheit kostengünstiger konzipiert werden, da durch das Vorsehen zumindest zweier Verdichterstufen die Verdichter für die einzelnen Verdichterstufen nicht so groß dimensioniert zu werden brauchen wie bei einer einstufigen Verdichtung, um die gewünschte Leistung zu erbringen. Durch das Vorsehen zumindest zweier Verdichterstufen kann der Betrag der Überverdichtung im Vergleich zu einer einstufigen Verdichtung reduziert werden, so dass auch die sogenannte NVH (Noice Vibration Harshness) reduziert, somit die Vibrationsgeräusche aufgrund der geringeren Überverdichtung reduziert werden können.

Unter einem batterieelektrisch betriebenen Fahrzeug wird vorliegend einerseits ein Fahrzeug verstanden, das ausschließlich von einem batteriebetriebenen Elektromotor angetrieben wird, andererseits ein Hybridfahrzeug, das zumindest teilweise oder zeitweise elektrisch betrieben wird. Zur Stromversorgung des Elektromotors ist ein Batteriesystem mit zumindest einer Traktionsbatterie vorgesehen. Das Thermomanagementsystem eines solchen batterieelektrisch betriebenen Fahrzeugs dient dazu, einerseits einen Fahrzeuginnenraum des Fahrzeugs zu klimatisieren bzw. zu temperieren, andererseits dazu, das Batteriesystem, umfassend die zumindest eine Traktionsbatterie des Fahrzeugs sowie optional weitere Fahrzeugkomponenten, wie z.B. den Elektromotor und die Leistungselektronik, auf einem solchen Temperaturniveau zu halten, dass ein möglichst hoher Wirkungsgrad erzielt und die Lebensdauer der Fahrzeugkomponenten, vor allem der Traktionsbatterie, so hoch wie möglich gehalten werden kann.

Das pneumatische System kann außer der zumindest einen Drucklufterzeugungseinheit in der Ausgestaltung als Luftfedersystem Luftfedern, die zumindest zwei Verdichterstufen der Drucklufterzeugungseinheit sowie zumindest ein Leitungssystem umfassen, wobei das Leitungssystem mit den Luftfedern in druckluftleitender Verbindung steht.

Durch ein thermisches Koppeln des pneumatischen Systems bzw. von dessen Drucklufterzeugungseinheit mit dem Thermomanagementsystem des Fahrzeugs, insbesondere batterieelektrisch betriebenen Fahrzeugs, ist einerseits eine Wärmeabfuhr und somit ein Kühlen der Verdichterstufen der Drucklufterzeugungseinheit des pneumatischen Systems des Fahrzeugs möglich, andererseits ein Wärmeeintrag in das Thermomanagementsystem des Fahrzeugs bzw. batterieelektrisch betriebenen Fahrzeugs. Die infolge der Verdichtung in den zumindest zwei Verdichterstufen der Drucklufterzeugungseinheit zur Verfügung stehende Wärme kann über die zumindest eine Kühleinrichtung an das Thermomanagementsystem des Fahrzeugs abgeführt werden. Diese Wärme kann im Thermomanagementsystem zum Beheizen ausgewählter Fahrzeugkomponenten genutzt werden, so dass die Drucklufterzeugungseinheit somit als Wärmequelle für die durch das Thermomanagementsystem des Fahrzeugs zu beheizenden Fahrzeugkomponenten genutzt werden kann. Solche Fahrzeugkomponenten können ein Batteriesystem, Klimakomfortkomponenten, wie eine HVAC(Heat Ventilation Air Conditioning)-Einheit, etc. sein. Die aus dem pneumatischen System bzw. dessen Drucklufterzeugungseinheit abgeführte Wärme wird somit in das Thermomanagementsystem eingetragen und kann darin für Heizzwecke genutzt werden. Hierdurch kann gerade bei batterieelektrisch betriebenen Fahrzeugen deren Reichweite im Winterbetrieb gegenüber bekannten batterieelektrisch betriebenen Fahrzeugen, die solche zusätzliche Wärme nicht zur Verfügung gestellt bekommen, erhöht werden, so dass der erzeugte Strom zum Antreiben des Fahrzeugs genutzt werden kann und nicht ein Teil von diesem zum Beheizen von zu temperierenden Fahrzeugkomponenten und/oder des Fahrzeuginnenraums, also der Fahrgastzelle, zur Verfügung gestellt werden muss. Im Sinne von Waste Heat Recovery, also der Nutzung von Abwärme, kann die in der Drucklufterzeugungseinheit abfallende Wärme zum Beheizen dieser Fahrzeugkomponenten und des Fahrzeuginnenraums genutzt werden. Gegebenenfalls kann auch ein PTC-Zuheizer, der in einem Kühlkreislauf eines Fahrzeugs angeordnet ist, entlastet werden.

Vorteilhaft kann die zumindest eine Drucklufterzeugungseinheit des pneumatischen Systems über jeweils zumindest eine Kühlmittelvorlaufleitung und zumindest eine Kühlmittelrücklaufleitung des zumindest einen Kühlmittelkreislaufs des Thermomanagementsystems thermisch gekoppelt sein oder werden. Es kann somit insbesondere über den zumindest einen Kühlmittelkreislauf des Thermomanagementsystems ein Einkoppeln von Wärme in dieses bzw. eine Wärmeabfuhr aus der Drucklufterzeugungseinheit in das Thermomanagementsystem erfolgen. Die zumindest eine Kühleinrichtung der Drucklufterzeugungseinheit bildet somit die Schnittstelle zur Wärmeabfuhr aus der Drucklufterzeugungseinheit in den zumindest einen Kühlmittelkreislauf des Thermomanagementsystems. Das pneumatische System des Fahrzeugs, beispielsweise das Luftfedersystem des Fahrzeugs, kann dementsprechend mit einem zum Temperieren von Elektronikkomponenten vorgesehenen Kühlmittelteilkreislauf und/oder mit einem zum Temperieren eines Batteriesystems, umfassend zumindest eine Traktionsbatterie, des Fahrzeugs vorgesehenen Kühlmittelteilkreislauf und/oder dem Kältemittelkreislauf zum Bereitstellen von Wärme im Fahrzeuginnenraum thermisch gekoppelt werden oder sein. Diese thermische Kopplung ist somit durch die zumindest eine Kühleinrichtung der Drucklufterzeugungseinheit des pneumatischen Systems des Fahrzeugs, insbesondere batterieelektrisch betriebenen Fahrzeugs, vorgesehen. Gerade zum Bereitstellen von Wärme im Fahrzeuginnenraum im Winterbetrieb erweist es sich als vorteilhaft, überschüssige Wärme, die im Bereich der Drucklufterzeugungseinheit durch die Verdichtung der Luft abfällt, zu nutzen, um den Fahrzeuginnenraum zu beheizen. Entsprechendes gilt für die Elektronikkomponenten des Fahrzeugs und dessen Traktionsbatterie, die ebenfalls temperiert werden.

Als besonders wirksam erweist es sich, das pneumatische System mit einem Niedertemperatur-Kühlmittelkreislauf oder einem Niedertemperatur-Kühlmittelteilkreislauf und/oder mit einem Mitteltemperatur-Kühlmittelkreislauf oder Mitteltemperatur-Kühlmittelteilkreislauf thermisch zu koppeln, in denen das Kühlmittel eine Temperatur von unter 80 °C aufweist. Beispielsweise kann die Kühlmitteltemperatur im Niedertemperatur-Kühlmittelkreislauf oder Niedertemperatur-Kühlmittelteilkreislauf 10 bis 45 °C und im Mitteltemperatur-Kühlmittelkreislauf oder Mitteltemperatur-Kühlmittelteilkreislauf 45 bis 80 °C betragen. In einem solchen Temperaturbereich des Kühlmittels eines der Kühlmittelkreisläufe bzw. Kühlmittelteilkreisläufe des Thermomanagementsystems ist ein wirksames Kühlen der zumindest einen Verdichterstufe der Drucklufterzeugungseinheit möglich.

Ferner ist es möglich, zumindest eine Druckluftabzweig- und/oder
- ableiteinrichtung zum Abzweigen und/oder Ableiten der durch die zumindest eine Drucklufterzeugungseinheit erzeugten Druckluft und zum Zurverfügungstellen an zumindest einer anderen Stelle des Fahrzeugs, insbesondere batterieelektrisch betriebenen Fahrzeugs, vorzusehen. Es ist somit möglich, die in der Drucklufterzeugungseinheit erzeugte Druckluft nicht nur zum Versorgen der Luftfedern des als Luftfedersystem ausgebildeten pneumatischen Systems des Fahrzeugs zur Verfügung zu stellen, sondern auch an anderen Stellen des Fahrzeugs zu nutzen. Die zumindest eine Druckluftabzweig- und/oder - ableiteinrichtung kann beispielsweise mit zumindest einer Reinigungseinrichtung zum Reinigen zumindest eines Sensors verbindbar oder verbunden sein. Es kann somit über die zumindest eine Druckluftabzweig- und/oder -ableiteinrichtung ein Teil der Druckluft abgezweigt werden, um mit dieser einen Sensor im Fahrzeug zu reinigen. Für eine solche Sensorreinigung kann zusätzlich auch ein Fluid vorgesehen werden, je nach dem, welche Art von Verunreinigungen auf dem Sensor auftreten. Eine solche Sensorreinigung kann insbesondere beim autonomen Fahren genutzt werden, um die dabei erforderlichen Sensoren permanent reinigen und somit in einem optimalen Zustand halten zu können.

Ferner ist es möglich, die zumindest Druckluftabzweig- und/oder -ableiteinrichtung zum Abzweigen und/oder Ableiten von Druckluft bei Vorsehen zumindest zweier Verdichterstufen in Luftströmungsrichtung vor der letzten Verdichterstufe und/oder hinter dieser anzuordnen. Dies ist insbesondere die zweite Verdichterstufe bei Vorsehen zweier Verdichterstufen der Drucklufterzeugungseinheit. Es ist somit insbesondere möglich, die zumindest eine Druckluftabzweig- und/oder
- ableiteinrichtung in Druckluftströmungsrichtung hinter der ersten Kühleinrichtung und vor der zweiten Verdichterstufe vorzusehen und/oder nach der zweiten Kühleinrichtung, die in Druckluftströmungsrichtung hinter der ersten Verdichterstufe angeordnet ist. Die von der Drucklufterzeugungseinheit erzeugte Druckluft kann somit über zumindest eine Druckluftleitung abgezeigt und beispielsweise in Richtung einer Reinigungseinheit bzw. eines Reinigungssystems abgeleitet werden, beispielsweise zum Reinigen von Sensoren oder anderen Komponenten des Fahrzeugs.

Die zumindest eine Kühleinrichtung der Drucklufterzeugungseinheit kann vorteilhaft in Luftströmungsrichtung hinter der ersten Verdichterstufe und/oder hinter der zweiten Verdichterstufe angeordnet sein. Insbesondere können somit zumindest zwei Kühleinrichtungen vorgesehen werden, eine erste in Luftströmungsrichtung hinter der ersten Verdichterstufe und eine zweite Kühleinrichtung in Luftströmungsrichtung hinter der zweiten Verdichterstufe. Bei Vorsehen zweier Kühleinrichtungen erweist es sich als vorteilhaft, die zumindest zwei Kühleinrichtungen in Reihe zu schalten. Hierdurch ist es möglich, die Luft zunächst durch die erste Verdichterstufe, nachfolgend durch die erste Kühleinrichtung, nachfolgend durch die zweite Verdichterstufe und im Anschluss daran durch die zweite Kühleinrichtung zu leiten. Es erfolgt somit vorteilhaft zwischen den beiden Verdichterstufe eine Zwischenkühlung über die erste Kühleinrichtung, so dass sich eine geringere Endtemperatur in Strömungsrichtung hinter der zweiten Verdichterstufe einstellen kann, die durch die zweite Kühleinrichtung weiter reduziert wird, so dass die jeweils über die Kühleinrichtungen abgeführte Wärme hinter den beiden Verdichterstufen dem Thermomanagementsystem des Fahrzeugs im Rücklauf des Kühlmittels und/oder des Kältemittels zur Verfügung gestellt werden kann.

Als besonders vorteilhaft erweist es sich, die erste Verdichterstufe und die zweite Verdichterstufe sowie die zumindest eine Kühleinrichtung in einer baulichen Einheit vorzusehen oder anzuordnen. Hierdurch ist es möglich, die komplette bauliche Einheit als Gesamteinheit in einem Fahrzeug anzuordnen und nicht die einzelnen Verdichterstufen und die einzelnen Kühleinrichtungen oder die zumindest eine Kühleinrichtung als separate Bauteile darin anordnen zu müssen. Dies erleichtert einerseits den Einbau dieser Komponenten in ein Fahrzeug, andererseits reduziert es auch den erforderlichen Platzbedarf, da dieser bei Vorsehen einer baulichen Einheit gegenüber dem getrennten Anordnen der Einzelkomponenten reduziert werden kann. Weiter vorteilhaft kann die gesamte Drucklufterzeugungseinheit zumindest ein Gehäuse aufweisen, in dem u.a. die zumindest zwei Verdichterstufen und die zumindest eine Kühleinrichtung angeordnet bzw. aufgenommen werden oder sind. Ferner ist es insbesondere möglich, die zumindest eine Kühleinrichtung an dem zumindest einem Gehäuse thermisch anzukoppeln oder anzuordnen. Es ist somit ebenfalls möglich, die zumindest eine Kühleinrichtung beispielsweise außenseitig oder innenseitig an dem zumindest einen Gehäuse der Drucklufterzeugungseinheit anzuordnen und hierüber eine Wärmeabfuhr der in der Drucklufterzeugungseinheit erzeugten Wärme in Richtung des Thermomanagementsystems des Fahrzeugs vorzusehen.

Zumindest eine der Verdichterstufen der Drucklufterzeugungseinheit kann ein Kolbenverdichter sein. Beispielsweise können alle Verdichterstufen Kolbenverdichter sein, insbesondere Hubkolbenverdichter, wie beispielsweise ein doppeltwirkender Hubkolbenverdichter. Alternativ oder zusätzlich ist es möglich, dass zumindest eine der Verdichterstufen ein Rotationsverdichter ist, insbesondere ein zweitstufiger Scrollverdichter oder Rollkolbenverdichter. Ferner ist es möglich, eine Kombination aus einem Rotationskolbenverdichter und einem Hubkolbenverdichter vorzusehen, also für die zumindest eine der zumindest zwei Verdichterstufen einen Rotationskolbenverdichter und für die zumindest eine andere Verdichterstufe einen Hubkolbenverdichter vorzusehen.

Zur näheren Erläuterung der Erfindung wird im Folgenden ein Ausführungsbeispiel von dieser näher anhand der Zeichnungen beschrieben. Diese zeigen in:
- Figur 1: eine Prinzipskizze eines erfindungsgemäßen Schaltungsaufbaus zum thermischen Koppeln eines Thermomanagementsystems eines batterieelektrisch betriebenen Fahrzeugs und einer erfindungsgemäßen Drucklufterzeugungseinheit,
- Figur 2: eine Prinzipskizze eines p-v-Diagramms zum Darstellen einer zweitstufigen Verdichtung im Vergleich zu einer einstufigen Verdichtung unter Aufzeigen von unterschiedlichen Überverdichtungen,
- Figur 3: ein Enthalpie-Entropie-Diagramm zur Darstellung einer zweistufigen Verdichtung mit erfindungsgemäßem ersten Kühlen oder Zwischenkühlen und zweitem Kühlen oder Endkühlen unter Nutzen zweier erfindungsgemäßer Kühleinrichtungen, und
- Figur 4: eine Prinzipskizze eines erfindungsgemäßen batterieelektrisch betriebenen Fahrzeugs mit erfindungsgemäßer Kopplung von Thermomanagementsystem und pneumatischem System in Form eines Luftfedersystems mit erfindungsgemäßer Drucklufterzeugungseinheit.

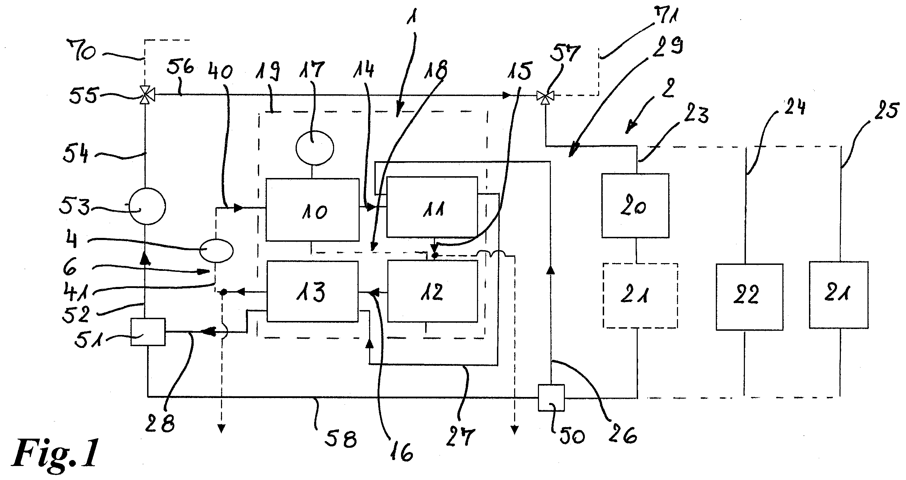

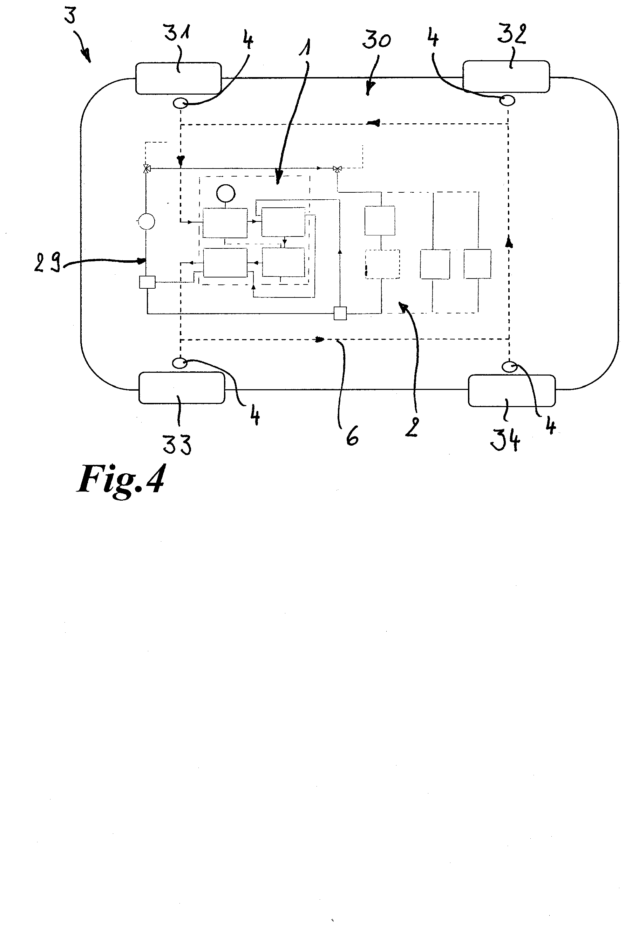

In Figur 1 ist eine Prinzipskizze einer Schaltungsanordnung einer thermischen Kopplung eines pneumatischen Systems 6 und eines Thermomanagementsystems 2 eines batterieelektrisch betriebenen Fahrzeugs 3, wie es in Figur 4 skizziert ist, im Bereich einer Drucklufterzeugungseinheit 1 des pneumatischen Systems 6 gezeigt. Das pneumatische System ist hier ein Luftfedersystem zum Versorgen von Luftfedern 4 des Fahrzeugs mit unter Druck stehender Luft. Die hierfür vorgesehene Drucklufterzeugungseinheit 1 umfasst eine zweistufige Verdichtung mit einer ersten Verdichterstufe 10 und einer zweiten Verdichterstufe 12. Ferner umfasst sie eine erste Kühleinrichtung 11 und eine zweite Kühleinrichtung 13, wobei die beiden Verdichterstufe 10, 12 und die beiden Kühleinrichtungen 11, 13 jeweils über Druckluftleitungen 14, 15, 16 miteinander druckluftleitend bzw. fluidisch verbunden sind. Die erste Verdichterstufe 10 und die zweite Verdichterstufe 12 werden über eine Antriebseinrichtung 17 angetrieben. Diese kann bei Anordnen der Drucklufterzeugungseinheit 1 in einem Personenkraftwagen (Pkw) eine elektrische Antriebseinrichtung sein, in einem Nutzfahrzeug eine mechanische Antriebseinrichtung. Um beide Verdichterstufen 10, 12 entsprechend antreiben zu können, sind diese in dem Ausführungsbeispiel nach Figur 1 mechanisch miteinander über eine mechanische Verbindungseinrichtung 18 gekoppelt. Die Drucklufterzeugungseinheit 1 weist ferner ein in Figur 1 durch gestrichelte Linien angedeutetes Gehäuse 19 auf, in dem die beiden Verdichterstufen 10, 12, die beiden Kühleinrichtungen 11, 13, die Druckluftleitungen 14, 15, 16 sowie die Antriebseinrichtung 17 und die mechanische Verbindungseinrichtung 18 angeordnet sind. Die gesamte Drucklufterzeugungseinheit 1 kann somit als eine Einheit in einem Fahrzeug angeordnet werden.

Zum Zuführen von Luft in die Drucklufterzeugungseinheit 1 ist an diese eine Zuführleitung 40 angeschlossen bzw. in diese hineingeführt und zum Herausführen der unter Druck stehenden und gekühlten Luft eine Abführleitung 41 an die Drucklufterzeugungseinheit 1 angeschlossen. Luft strömt über die Zuführleitung 40 in die erste Verdichterstufe 10 ein und über die Abführleitung 41 aus der zweiten Kühleinrichtung 13 wieder aus. Die Zuführleitung 40 und die Abführleitung 41 sind sowie die Druckluftleitungen 14, 15, 16 mit zwischen diesen angeordneter erster und zweiter Verdichterstufe 10, 12 und den beiden Kühleinrichtungen 11, 13 sind zu einem geschlossenen Druckluftkreislauf verbunden. Im Strömungsweg zwischen der Abführleitung 41 und der Zuführleitung 40 sind die in Figur 1 lediglich angedeuteten Luftfedern 4 des Luftfedersystems bzw. pneumatischen Systems 6 des Fahrzeugs 3 angeordnet.

Wie ferner Figur 1 entnommen werden kann, umfasst das Thermomanagementsystem 2 drei Kühlmittelteilkreisläufe 23, 24, 25, wobei in dem ersten Kühlmittelteilkreislauf 23 ein Batteriesystem 20, das üblicherweise u.a. eine Traktionsbatterie des batterieelektrisch betriebenen Fahrzeugs sowie weitere Fahrzeugkomponenten, wie beispielsweise einen Elektromotor und eine Leistungselektronik, umfasst, angeordnet ist. Ferner können weitere Kühlmittelkreisläufe vorgesehen sein, was durch die gestrichelten Linien 70, 71 in Figur 1 angedeutet ist. In diesem Kühlmittelteilkreislauf 23 können in Reihe zum Batteriesystem 20 Elektronikkomponenten 21 angeordnet sein, die ebenfalls über das Thermomanagementsystem 2 temperiert werden. Ferner können die Elektronikkomponenten 21 in dem Kühlmittelteilkreislauf 25 angeordnet und somit parallel zu dem Kühlmittelteilkreislauf 23 mit dem Batteriesystem 20 geschaltet werden, um diese wahlweise bzw. unterschiedlich temperieren zu können. Daher sind die Elektronikkomponenten 21 im Kühlmittelteilkreislauf 23 lediglich als gestricheltes Kästchen angedeutet und zusätzlich im Kühlmittelteilkreislauf 25.

Im Kühlmittelteilkreislauf 24 des Thermomanagementsystems 2 eine Heat Ventilation Air Conditioning Einheit (HVAC-Einheit) 22 angedeutet, die dem das Batteriesystem 20 umfassenden Kühlmittelteilkreislauf 23 und dem Kühlmittelteilkreislauf 25 parallelgeschaltet ist. Über die Heat Ventilation Air Conditioning Einheit (HVAC-Einheit) 22 werden Komfortaufgaben, also Heiz- und Kühlaufgaben, für einen Fahrzeuginnenraum 30, also Fahrgastraum, wie er in Figur 4 im Fahrzeug 3 angedeutet ist, zur Verfügung gestellt, um diesen geeignet zu klimatisieren.

Die Kühlmittelteilkreisläufe 23, 24, 25 sind Teil eines Kühlmittelkreislaufs 29. Das in diesen bzw. diesem strömende Kühlmittel kann von den parallelgeschalteten Kühlmittelteilkreisläufen 23, 24, 25 über ein erstes Ventil 50 und durch eine Kühlmittelleitung 26 zur ersten Kühleinrichtung 11 strömen, durch diese hindurch durch eine weitere Kühlmittelleitung 27 zur zweiten Kühleinrichtung 13 strömen. Von dieser gelangt das Kühlmittel über eine weitere Kühlmittelleitung 28 zu einem zweiten Ventil 51, von diesem über eine Kühlmittelleitung 52 zu einer Pumpeinrichtung 53, die dem Fördern des Kühlmittels innerhalb des Kühlmittelkreislaufs 29 dient, und von dieser über eine weitere Kühlmittelleitung 54 zu einem Dreiwegeventil 55. Über das Dreiwegeventil 55 kann das Kühlmittel entweder zurück zu den Kühlmittelteilkreisläufen 23, 24, 25 oder in weitere Kühlmittelkreisläufe strömen. Um zurück zu den drei Kühlmittelteilkreisläufen 23, 24, 25 strömen zu können, wird das Dreiwegeventil 55 so eingestellt, dass das Kühlmittel über eine weitere Kühlmittelleitung 56 zu einem zweiten Dreiwegeventil 57 und von dort zu dem Kühlmittelteilkreislauf 23 strömen kann. Über das zweite Dreiwegeventil 57 kann das Kühlmittel, wenn es beim ersten Dreiwegeventil 55 in eine oder mehrere weitere Kühlmittelteilkreisläufe eingeströmt ist, wieder zurück zu den Kühlmittelteilkreisläufen 23, 24, 25 strömen, um den Kühlmittelkreislauf 29 zu schließen.

Über das erste Ventil 50 und das zweite Ventil 51 sowie eine zwischen diesen zusätzlich vorgesehene Bypassleitung 58 ist es möglich, das Kühlmittel von den drei Kühlmittelteilkreisläufen 23, 24, 25 direkt über die Kühlmittelleitung 52 in Richtung der Pumpeinrichtung 53 strömen zu lassen. Die beiden Kühleinrichtungen 11, 13 werden hierbei umgangen. Dies ist ebenfalls Figur 1 zu entnehmen. Es ist somit möglich, keinen Wärmeaustausch mit der Drucklufterzeugungseinheit 1 über deren Kühleinrichtungen 11, 13 vorzusehen.

Ferner ist es möglich, die in der Drucklufterzeugungseinheit 1 erzeugte Druckluft auch für andere Zwecke im Fahrzeug zur Verfügung zu stellen, wie beispielsweise zum Zuführen zu einem hier nicht gezeigten Reinigungssystem. Beispielhaft sind in Figur 1 zwei Druckluftabzweigleitungen 42, 43 gezeigt, wobei eine erste Druckluftabzweigeinrichtung in Form einer Abzweigstelle 44 entlang der Druckluftleitung 15 vorgesehen ist und eine zweite Druckluftabzweigeinrichtung in Form einer Abzweigstelle 45 entlang der Abführleitung 41. Gerade an diesen Stellen eignet sich ein Abzweigen von Druckluft, da in den beiden Kühleinrichtungen 11, 13 der unter Druck stehenden Luft bereits Wärme entzogen wurde. Die beiden Kühleinrichtungen 11, 13 dienen dazu, einerseits die Wärme, die jeweils in den beiden Verdichterstufen 10, 12 beim Verdichten anfällt, aus dem Druckluftsystem bzw. der Drucklufterzeugungseinheit 1 abzuführen, um die überschüssige Wärme von den Luftfedern 4 fernzuhalten. Diese überschüssige Wärme wird über Wärmetausch im Bereich der beiden Kühleinrichtungen 11, 13 thermisch in den Kühlmittelkreislauf 29 des Thermomanagementsystems 2 eingekoppelt und steht somit insbesondere in den drei Kühlmittelteilkreisläufen 23, 24, 25 zum Temperieren der in diesen vorgesehenen Komponenten des Batteriesystems 20, der einen oder mehreren Elektronikkomponenten 21 sowie der HVAC-Einheit 22 zur Verfügung.

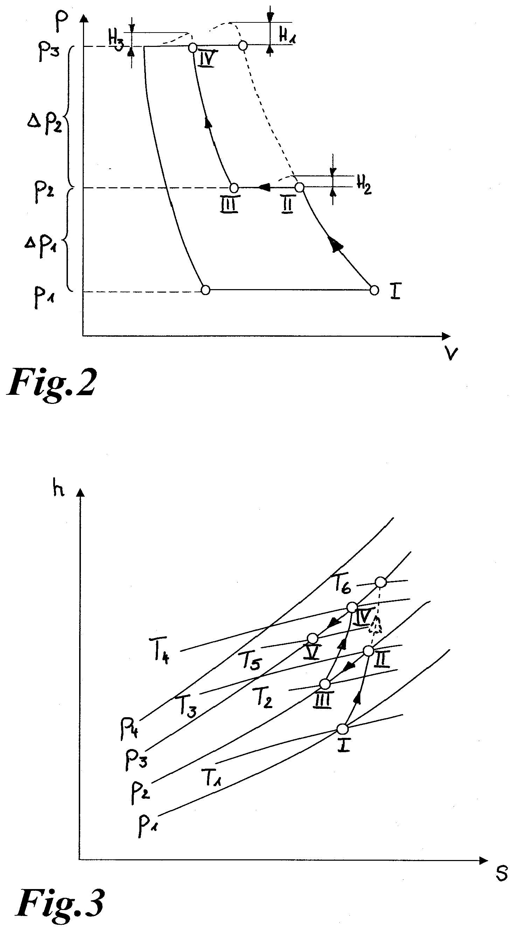

Figur 2 zeigt ein p-v-Diagramm, bei dem der Druck p über dem Volumen oder Hubvolumen v aufgetragen ist. Das Volumen bzw. Hubvolumen v verkleinert sich in der Verdichterstufe, danach durch Kühlen und nachfolgend weiter in der zweiten Verdichterstufe. Die in der ersten Verdichterstufe 10 auftretende Druckdifferenz p₁ und die in der zweiten Verdichterstufe 12 auftretende Druckdifferenz p₂ finden sich auf der y-Achse des p-v-Diagramms, wobei Δp₁ = p₂ - p₁ und Δp₂ = p₃ - p₂ ist. Der Figur 2 kann ferner besonders gut die Problematik eines Überverdichtens zum Öffnen von Ventilen bei einer einstufigen Verdichtung und demgegenüber bei einer zweistufigen Verdichtung über die beiden Verdichterstufen 10, 12 entnommen werden. Eine solche Überverdichtung führt zu Verlusten, Geräuschentwicklung aufgrund Druckpulsation und einer Beschädigung des Verdichters bzw. der Verdichterstufen aufgrund hoher Verdichtungsendtemperaturen bei einer einstufigen Verdichtung, die sich ungünstig auf die Standzeit der Bauteile und somit auf die Lebensdauer auswirkt, so dass die Überverdichtung möglichst gering gehalten werden sollte. Die bei einer einstufigen Verdichtung sich ergebende Überverdichtung H₁, die durch eine gestrichelte Linie in Figur 2 angedeutet ist, ist erkennbar deutlich größer als die bei einer zweistufigen Verdichtung nach der ersten Verdichterstufe auftretende Überverdichtung H₂ und die bei einer zweistufigen Verdichtung nach der zweiten Verdichterstufe auftretende Überverdichtung H₃. Auch die beiden Überverdichtungen H₂ und H₃ sind jeweils durch gestrichelte Linien im in Figur 2 gezeigten Druck-Volumen-Diagramm (p-v-Diagramm) angedeutet. Je größer die Überverdichtung ist, desto stärker das Geräusch der Druckpulsation, so dass die geringeren Überverdichtungen H₂ und H₃ weniger geräuschintensiv sind.

Figur 3 kann besonders gut der in der Druckerzeugungseinheit 1 nach Figur 1 ablaufende Vorgang der zweistufigen Verdichtung mit Zwischenkühlen und Endkühlen entnommen werden. In Figur 3 ist die spezifische Enthalpie h auf der spezifischen Entropie s aufgetragen, wobei in dem gezeigten Diagramm die Isobaren p und Isothermen T eingetragen sind. p und T sind jeweils konstant. Bei der in den beiden Verdichterstufen 10, 12 gemäß Figur 1 durchgeführten zweistufigen Verdichtung erfolgt zunächst in der ersten Verdichterstufe 10 eine Verdichtung und somit Druckerhöhung vom Druck p₁ auf den Druck p₂. Hierbei steigt auch die Temperatur von der Temperatur T₁ auf die Temperatur T₃ an, wie ebenfalls Figur 3 entnommen werden kann, siehe Punkt I nach Punkt II. Durch Vorsehen der ersten Kühleinrichtung 11 kann die Temperatur in der Druckerzeugungseinheit 1 reduziert werden auf die Temperatur T₂ bei gleichbleibendem Druck p₂ (Punkt II nach Punkt III). In der zweiten Verdichterstufe 12 erfolgt eine weitere Druckerhöhung vom Druck p₂ auf den Druck p₃ bei gleichzeitigem Temperaturanstieg der komprimierten Luft auf die Temperatur T₄ (Punkt III nach Punkt IV). In der zweiten Kühleinrichtung 13 wird die Temperatur der Luft vermindert auf die Temperatur T₅ (Punkt IV nach Punkt V). Bereits bei Vorsehen nur der ersten Kühleinrichtung 11 ist es somit möglich, gegenüber einer einstufigen Verdichtung, wie sie durch gestrichelte Linien bis auf die Temperatur T₆ angedeutet ist, eine niedrigere Endtemperatur bei gleichem Druck p₃ zu erreichen, somit weniger Wärme abführen zu müssen. Durch Vorsehen der zweiten Kühleinrichtung 13 kann die Endtemperatur, nämlich die Temperatur T₅, in der Druckerzeugungseinheit 1 bzw. der über die Abführleitung 41 aus dieser ausströmenden und unter dem Druck p₃ stehenden Luft deutlich reduziert werden. Wie bereits vorstehend erläutert, kann diese überschüssige Wärme dem Thermomanagementsystem 2 des Fahrzeugs 3 zur Verfügung gestellt werden, um insbesondere Heizfunktionen im Komfortkreislauf zum Temperieren des Fahrzeuginnenraums 30, also des Fahrgastraumes, bzw. von Fahrzeugkomponenten vorsehen zu können.

In Figur 4 ist das batterieelektrisch betriebene Fahrzeug 3 angedeutet, das außer dem Fahrzeuginnenraum 30 selbstverständlich vier Räder 31, 32, 33, 34 sowie mehrere Luftfedern 4 im Bereich der Räder 31, 32, 33, 34 aufweist. Die Luftfedern 4 sind Teil des pneumatischen Systems 6 ebenso wie die Drucklufterzeugungseinheit 1 und die Druckluftleitungen 14, 15, 16, 40, 41. Zur Wärmeabfuhr aus dem pneumatischen System 6 erfolgt eine thermische Kopplung mit dem Kühlmittelkreislauf 29 des Thermomanagementsystems 2 im Bereich der Drucklufterzeugungseinheit 1, wobei nicht nur Wärme aus dem pneumatischen System 6 des Fahrzeugs 3 abgeführt wird, sondern auch ein Wärmeeintrag in das Thermomanagementsystem 2 zum Temperieren von dessen Fahrzeugkomponenten des Batteriesystems 20, der Elektronikkomponenten 21 und der HVAC-Einheit 22 erfolgen kann. Die drei Kühlmittelteilkreisläufe 23, 24, 25 können hierbei entweder alle von dem entsprechend temperierten Kühlmittel durchströmt werden oder wahlweise lediglich einer oder zwei der Kühlmittelteilkreisläufe 23, 24, 25, je nach dem welche der Komponenten über die aus dem pneumatischen System 6 abgeführte Wärme temperiert werden soll, insbesondere beheizt werden soll.

Neben den im Vorstehenden beschriebenen und in den Figuren gezeigten Ausführungsvarianten einer Drucklufterzeugungseinheit zum Erzeugen von Druckluft für ein pneumatisches System eines Fahrzeugs, insbesondere eines batterieelektrisch betriebenen Fahrzeugs, sowie eines entsprechend mit einem solchen pneumatischen System mit Drucklufterzeugungseinheit versehenen batterieelektrisch betriebenen Fahrzeugs können noch zahlreiche weitere gebildet werden, insbesondere auch beliebige Kombinationen der vorstehend genannten Merkmale von diesen, wobei jeweils das Thermomanagementsystem des batterieelektrisch betriebenen Fahrzeugs und das pneumatische System von diesem thermisch gekoppelt werden zur Wärmeabfuhr aus dem pneumatischen System und zum Wärmeeintrag in das Thermomanagementsystem. Hierbei ermöglicht es die Drucklufterzeugungseinheit, dass ein Wärmeübergang über zumindest eine Kühleinrichtung von dieser erfolgt, wobei eine zumindest zweistufige Verdichtung vorgesehen ist und eine erste Drucklage nach einer ersten Verdichterstufe und eine zweite Drucklage nach einer zweiten Verdichterstufe erreicht werden kann oder wird und die zumindest eine Kühleinrichtung zum Kühlen zumindest zwischen der ersten und zweiten Drucklage vorgesehen ist und diese zumindest eine Kühleinrichtung thermisch mit dem Thermomanagementsystem des Fahrzeugs gekoppelt wird oder werden kann.

### Bezugszeichenliste

- 1: Drucklufterzeugungseinheit
- 2: Thermomanagementsystem
- 3: batterieelektrisch betriebenes Fahrzeug
- 4: Luftfeder
- 6: pneumatisches System
- 10: erste Verdichterstufe
- 11: erste Kühleinrichtung
- 12: zweite Verdichterstufe
- 13: zweite Kühleinrichtung
- 14: Druckluftleitung
- 15: Druckluftleitung
- 16: Druckluftleitung
- 17: Antriebseinrichtung
- 18: mechanische Verbindungseinrichtung
- 19: Gehäuse
- 20: Batteriesystem
- 21: Elektronikkomponente
- 22: Heat Ventilation Air Conditioning Einheit (HVAC-Einheit)
- 23: Kühlmittelteilkreislauf
- 24: Kühlmittelteilkreislauf
- 25: Kühlmittelteilkreislauf
- 26: Kühlmittelleitung
- 27: Kühlmittelleitung
- 28: Kühlmittelleitung
- 29: Kühlmittelkreislauf
- 30: Fahrzeuginnenraum
- 31: Rad
- 32: Rad
- 33: Rad
- 34: Rad
- 40: Zuführleitung
- 41: Abführleitung
- 42: Druckluftabzweigleitung
- 43: Druckluftabzweigleitung
- 44: erste Abzweigstelle
- 45: zweite Abzweigstelle
- 50: erstes Ventil
- 51: zweites Ventil
- 52: Kühlmittelleitung
- 53: Pumpeinrichtung
- 54: Kühlmittelleitung
- 55: Dreiwegeventil
- 56: Kühlmittelleitung
- 57: Dreiwegeventil
- 58: Bypassleitung
- 70: Kühlmittelkreislauf
- 71: Kühlmittelkreislauf
- H₁: Überverdichtung einstufige Verdichtung
- H₂: Überverdichtung zweistufige Verdichtung, 1. Stufe
- H₃: Überverdichtung zweistufige Verdichtung, 2. Stufe
- h: spezifische Enthalpie
- s: spezifische Entropie
- T₁: Temperatur 1
- T₂: Temperatur 2
- T₃: Temperatur 3
- T₄: Temperatur 4
- T₅: Temperatur 5
- T₆: Temperatur 6
- p₁: Druck 1
- p₂: Druck 2
- p₃: Druck 3
- p₄: Druck 4
- p₅: Druck 5
- Δp₁: Druckdifferenz 1. Stufe Verdichtung
- Δp₂: Druckdifferenz 2. Stufe Verdichtung

## Patentansprüche

1. Drucklufterzeugungseinheit (1) zum Erzeugen von Druckluft für ein pneumatisches System (6) eines Fahrzeugs, insbesondere eines batterieelektrisch betriebenen Fahrzeugs (3),
**dadurch gekennzeichnet, dass**
die Drucklufterzeugungseinheit (1) zumindest zwei Verdichterstufen (10, 12) umfasst, wobei eine erste Drucklage (p₂) nach einer ersten Verdichterstufe (10) und eine zweite Drucklage (p₃) nach einer zweiten Verdichterstufe (12) erreichbar ist oder erreicht wird,
und dass zumindest eine Kühleinrichtung (11, 13) zum Kühlen zumindest zwischen der ersten und der zweiten Drucklage (p₂, p₃) vorgesehen ist, wobei die zumindest eine Kühleinrichtung (11, 13) zum thermischen Koppeln mit einem Thermomanagementsystem (2) des Fahrzeugs (3) ausgebildet ist.

2. Drucklufterzeugungseinheit (1) nach Anspruch 1,
**dadurch gekennzeichnet, dass**
die erste Verdichterstufe (10) und die zweite Verdichterstufe (12) und die zumindest eine Kühleinrichtung (11, 13) in einer baulichen Einheit (19) vorgesehen oder angeordnet sind.

3. Drucklufterzeugungseinheit (1) nach Anspruch 1 oder 2,
**dadurch gekennzeichnet, dass**
die zumindest eine Kühleinrichtung (11, 13) in Luftströmungsrichtung hinter der ersten Verdichterstufe (10) und/oder hinter der zweiten Verdichterstufe (12) angeordnet ist.

4. Drucklufterzeugungseinheit (1) nach einem der vorstehenden Ansprüche,
**dadurch gekennzeichnet, dass**
zumindest zwei Kühleinrichtungen (11, 13) vorgesehen sind, wobei eine erste Kühleinrichtung (11) in Luftströmungsrichtung hinter der ersten Verdichterstufe (10) und eine zweite Kühleinrichtung (13) in Luftströmungsrichtung hinter der zweiten Verdichterstufe (12) angeordnet ist.

5. Drucklufterzeugungseinheit (1) nach einem der vorstehenden Ansprüche,
**dadurch gekennzeichnet, dass**
die zumindest zwei Kühleinrichtungen (11, 13) in Reihe geschaltet sind.

6. Drucklufterzeugungseinheit (1) nach einem der vorstehenden Ansprüche,
**dadurch gekennzeichnet, dass**
die Drucklufterzeugungseinheit (1) zumindest ein Gehäuse (19) aufweist und die zumindest eine Kühleinrichtung (11, 13) an dem zumindest einen Gehäuse (19) thermisch ankoppelbar oder angekoppelt oder angeordnet ist.

7. Drucklufterzeugungseinheit (1) nach einem der vorstehenden Ansprüche,
**dadurch gekennzeichnet, dass**
zumindest eine der Verdichterstufen (10, 12) ein Kolbenverdichter ist, insbesondere ein Hubkolbenverdichter, insbesondere ein doppeltwirkender Hubkolbenverdichter, und/oder ein Rotationsverdichter ist, insbesondere ein zweistufiger Scrollverdichter oder Rollkolbenverdichter.

8. Batterieelektrisch betriebenes Fahrzeug (3), insbesondere Landfahrzeug, umfassend zumindest ein pneumatisches System (6) und zumindest ein Thermomanagementsystem (2), wobei das zumindest eine Thermomanagementsystem (2) zumindest einen Kühlmittelkreislauf (29) mit zumindest einer Kühlmittelleitung (26, 27, 28, 52, 54, 56, 58) umfasst, und wobei das pneumatische System (6) zumindest eine Drucklufterzeugungseinheit (1) nach einem der vorstehenden Ansprüche umfasst,
**dadurch gekennzeichnet, dass**
das Thermomanagementsystem (2) und das pneumatische System (6) thermisch koppelbar oder gekoppelt sind zur Wärmeabfuhr aus dem pneumatischen System (6) und zum Wärmeeintrag in das Thermomanagementsystem (2).

9. Batterieelektrisch betriebenes Fahrzeug (3) nach Anspruch 8,
**dadurch gekennzeichnet, dass**
die zumindest eine Drucklufterzeugungseinheit (1) des pneumatischen Systems (6) über jeweils zumindest eine Kühlmittelvorlaufleitung (26) und zumindest eine Kühlmittelrücklaufleitung (28) des zumindest einen Kühlmittelkreislaufs (29) des Thermomanagementsystems (2) thermisch koppelbar oder gekoppelt ist.

10. Batterieelektrisch betriebenes Fahrzeug (3) nach Anspruch 8 oder 9,
**dadurch gekennzeichnet, dass**
das pneumatische System (6) mit einem zum Temperieren von Elektronikkomponenten (21) vorgesehenen Kühlmittelteilkreislauf (23, 25) und/oder mit einem zum Temperieren eines Batteriesystems (20) des Fahrzeugs (3) vorgesehenen Kühlmittelteilkreislauf (23) und/oder einem Kältemittelkreislauf des Fahrzeugs (3) zum Bereitstellen von Wärme im Fahrzeuginnenraum (30) thermisch koppelbar oder gekoppelt ist.

11. Batterieelektrisch betriebenes Fahrzeug (3) nach einem der Ansprüche 8 bis 10,
**dadurch gekennzeichnet, dass**
das pneumatische System (6) mit einem Niedertemperatur-Kühlmittelkreislauf oder Kühlmittelteilkreislauf und/oder einem Mitteltemperatur-Kühlmittelkreislauf oder Kühlmittelteilkreislauf thermisch koppelbar oder gekoppelt ist, in denen das Kühlmittel eine Temperatur von unter 80 °C aufweist, insbesondere das Kühlmittel im Niedertemperatur-Kühlmittelkreislauf oder Kühlmittelteilkreislauf eine Kühlmitteltemperatur von 10 bis 45 °C und im Mitteltemperatur-Kühlmittelkreislauf oder Kühlmittelteilkreislauf eine Kühlmitteltemperatur von 45 bis 80 °C aufweist.

12. Batterieelektrisch betriebenes Fahrzeug (3) nach einem der Ansprüche 8 bis 11,
**dadurch gekennzeichnet, dass**
das pneumatische System (6) ein Luftfedersystem ist, das Luftfedern (4),die zumindest eine Drucklufterzeugungseinheit (1) mit zumindest zwei Verdichterstufen (10, 12) und zumindest ein Leitungssystem umfasst, wobei das Leitungssystem mit den Luftfedern (4) in druckluftleitender Verbindung steht.

13. Batterieelektrisch betriebenes Fahrzeug (3) nach einem der Ansprüche 8 bis 12,
**dadurch gekennzeichnet, dass**
zumindest eine Druckluftabzweig- und/oder -ableiteinrichtung (44, 45) zum Abzweigen und/oder Ableiten der durch die zumindest eine Drucklufterzeugungseinheit (1) erzeugten Druckluft und zum Zurverfügungstellen an zumindest einer anderen Stelle des Fahrzeugs (3) vorgesehen ist.

14. Batterieelektrisch betriebenes Fahrzeug (3) nach Anspruch 13,
**dadurch gekennzeichnet, dass**
die zumindest eine Druckluftabzweig- und/oder -ableiteinrichtung (44, 45) mit zumindest einer Reinigungseinrichtung zum Reinigen zumindest eines Sensors verbindbar oder verbunden ist.

15. Batterieelektrisch betriebenes Fahrzeug (3) nach Anspruch 13 oder 14,
**dadurch gekennzeichnet, dass**
die zumindest eine Druckluftabzweig- und/oder -ableiteinrichtung (44, 45) zum Abzweigen und/oder Ableiten von Druckluft bei Vorsehen zumindest zweier Verdichterstufen (10, 12) in Luftströmungsrichtung vor der letzten Verdichterstufe (12) und/oder hinter dieser anordbar oder angeordnet ist.
